# EUROPEAN PATENT SPECIFICATION

(11) **EP 2 066 105 B1**
(45) Date of publication and mention of the grant of the patent: **29.07.2015**
(21) Application number: 09154510.3
(22) Date of filing: 17.03.2003
(51) Int. Cl.: H04M 15/06, H04M 15/08, G07F 5/18, H04L 12/28

(54) **Method, system and device for collecting data**
Verfahren und System zur Datensammlung und eine Vorrichtung
Procédé et système de collecte de données et dispositif

(30) Priority: 26.03.2002 FI 20020575
(43) Date of publication of application: 03.06.2009
(62) Divisional of application: 03396024.6
(73) Proprietor: TeliaSonera AB, 106 63 Stockholm (SE)
(72) Inventor: Welin, Olli, 02360, Espoo (FI)
(74) Representative: Tampereen Patenttitoimisto Oy

(56) References cited:
- WO-A-95/05609
- US-B1- 6 320 950

## Description

The present invention relates to a method for collecting data from at least one device to a control room, in which method a data transfer request is transmitted to the device, and the requested data is determined in the device which receives the data transfer request. The invention also relates to a system with means for collecting data from a device, means for transmitting a data transfer request to the device, and which device comprises means for determining the requested data. Furthermore, the invention relates to a device for use in a system with means for collecting data from a device, means for transmitting a data transfer request to the device, and which device comprises means for determining the requested data.

Various vending machines have been developed for piece goods, such as automatic drink vending machines, newspaper vending machines, ticket vending machines, stamp vending machines, slot machines, etc., at which a consumer can buy a desired product and pay it, for example, in cash, with a charge card, or by phone. Such automatic vending machines are often placed in such locations where there is a sufficient number of potential purchasers to cover the costs for the use and the maintenance of the automatic vending machine. Suitable locations include public transport stations, large shopping centres, department stores, schools, and even business enterprises. Because the vending machines are placed in a large area and there is normally no maintenance personnel in the vicinity, for example for reasons related to costs, systems have been developed for the controlling and maintenance of vending machines, wherein the vending machines can be monitored even far away from the vending machine, by using a suitable remote connection. Typically, such systems comprise a control room or another centralized location where the status of the vending machines placed in different locations can be monitored.

Self-diagnostic systems have been developed for monitoring the status of the vending machines. At the stage of detecting a defect or another event requiring correction measures, the vending machine transmits information of this, for example, by setting up a circuit-switched phone call to the control room. In the call, information is transmitted about the defect situation. However, it is sometimes necessary to find out the status of the vending machine without the occurrence of a defect situation. For example, it should be found out how many various drinks are left in a drink vending machine, or what has been the sale of a given newspaper in a newspaper vending machine. In such a case, a connection, for example a normal circuit-switched call, is set up from the control room to the vending machine. The vending machine answers the call and receives information about the operation which is to be carried out. After this, the vending machine starts to perform the function, for example to collect data about the numbers of different drinks left, and generates a reply message to be transmitted to the control room. This reply message is transmitted via an active connection. Consequently, the connection is active during the whole time of the determination, wherein connection costs are accumulated for the time of the whole determination, irrespective of the quantity of data to be transmitted. This may have a significant effect on the maintenance costs of the system.

In one system, text messages (SMS) are used for data transmission, wherein a given text message is transmitted from the control room to the vending machine. After this, the vending machine determines the content of the text message and starts to find out the requested data. After finding out the data, the vending machine generates a reply message as a text message and transmits it to the control room. A disadvantage in this system is, for example, the limited length of a text message, wherein the quantity of data to be transmitted in one text message is relatively small. To send a larger quantity of data, several text messages can be transmitted from the vending machine, but in this case the communication costs will increase correspondingly. Furthermore, the transmission of several text messages may be time consuming.

Systems are also known in which a control function can be performed by calling a given number. The control device is thus provided with means for examining an incoming call. The number of the calling telephone is determined from the call data. Information about at least one telephone number and the related operation is stored in the device. Thus, if the number of the calling phone is one of the predetermined numbers stored in the device, the device will take the measure relating to said number, for example, open a lock in a door. However, such a system involves the disadvantage that it only operates in one direction, wherein e.g. information about the status of a vending machine cannot be collected by such a system.

US patent 6,320,950 discloses a system further developed from the above system, wherein a vending machine makes a return call when the vending machine detects that a call is made from a given number. Consequently, the vending machine does not answer the incoming call but will wait until the end of the incoming call attempt (disengagement of the line), after which the vending machine will start to set up a call to the calling number. In the system, a circuit-switched connection is used both when calling from the control room to the vending machine and when calling from the vending machine to the control room. The data transmission is thus limited to the possibilities provided by said circuit-switched connection only. For example, the charge for the data transmission will be based on the time of duration of the connection. In addition, the data transmission rate is limited by the maximum data transmission rate of the circuit-switched connection, as well as the rates of the modems used in the devices.

The patent publication EP 1 340 357 discloses communications with remote embedded applications. In a communications system, a computer network server is arranged to communicate simultaneously with a plurality of remote computers. A remote embedded application in the form of a vending machine has a module that is arranged to communicate with the computer network server such that file transfer sessions are carried out between the server and the vending machine. The server is arranged to cause call request data to be transmitted to the module and the module is arranged to initiate a call back to the server or other designated server, in response to the call request data. The call request data is transmitted using calling line identification (CLI). The module is arranged to detect the call and the CLI; to not answer the call; and to initiate a call back to the server 2 or other designated server, after having received the call with CLI. The call request data may alternatively be transmitted to the module in the form of a short message service (SMS) message.

It is an aim of the present invention to provide a method and a system, in which the collection of data can be performed in a more flexible way, faster, and with lower costs than in systems of prior art. The invention is based on the idea that the connection from the control room to the device and the connection from the device to the control room are implemented by using different data transmission arrangements (connections). The connection from the control room to the device is to be made by using a first connection. However, the device will not answer a connection request from the control room, but the sender of the connection request is identified and compared with at least one predetermined reference data. After this identification, the device starts to take the necessary measures, for example to collect data about the operating status of the device, and first after taking these measures, the device starts to set up a connection to the control room by using the second connection. In an advantageous embodiment of the invention, said first connection is a circuit-switched connection and said second connection is a packet-switched connection. To put it more precisely, the method according to the present invention is primarily characterized in that the device is an automatic vending machine for piece goods, that said first connection is used to inform the device of starting a sales transaction, and that information about the final result of the purchase transaction is transmitted from the device by using said second connection. Furthermore, the device according to the invention is primarily characterized in that said device is an automatic vending machine for piece goods, that said first connection is arranged to be used to inform the device of starting a sales transaction, and that information about the final result of the purchase transaction is arranged to be transmitted from the device by using said second connection.

The present invention shows remarkable advantages over solutions of prior art. In the system according to the invention, the device will not answer an incoming call from the control room, but the caller is preferably identified on the basis of the number of the calling telephone which is transmitted along with the call signalling. The device can thus start to take the requested measures after it has identified the caller. The connection from the device to the control room is set up first after the device has taken the necessary measures. Thus, first of all, there will not be any connection costs for sending the request nor for the time when the device is taking the requested measures. Because the data transmission from the device to the control room is taken by using a different connection than from the control room to the device, both of said connection forms can be preferably selected on the basis of suitability for the function in question. For example, data transmission from the device to the control room can be performed by using a packet connection, wherein connection costs are normally charged on the basis of the quantity of transmitted data only, not on the basis of the connection time. Furthermore, data transmission is normally faster via a packet connection than via a circuit-switched connection, particularly when wireless connections are used. By the arrangement of the invention, it is also possible to significantly reduce the transmission costs of small data quantities at frequent intervals, in comparison with solutions of prior art, for example for the reason that the second connection form can be selected to be a connection in which no fixed fee is charged for each connection time but only for the quantity of data to be transmitted, or in which such a fee is as small as possible.

In the following, the invention will be described in more detail with reference to the appended drawings, in which
- Fig. 1: shows a system according to a first advantageous embodiment of the invention in a reduced chart,
- Fig. 2: shows signalling to be used in the method according to the first advantageous embodiment of the invention in a reduced manner,
- Fig. 3: shows the system according to a second advantageous embodiment of the invention in connection with payment transactions, and

- Fig. 4: shows signalling to be used in the method according to the second advantageous embodiment of the invention in a reduced manner.

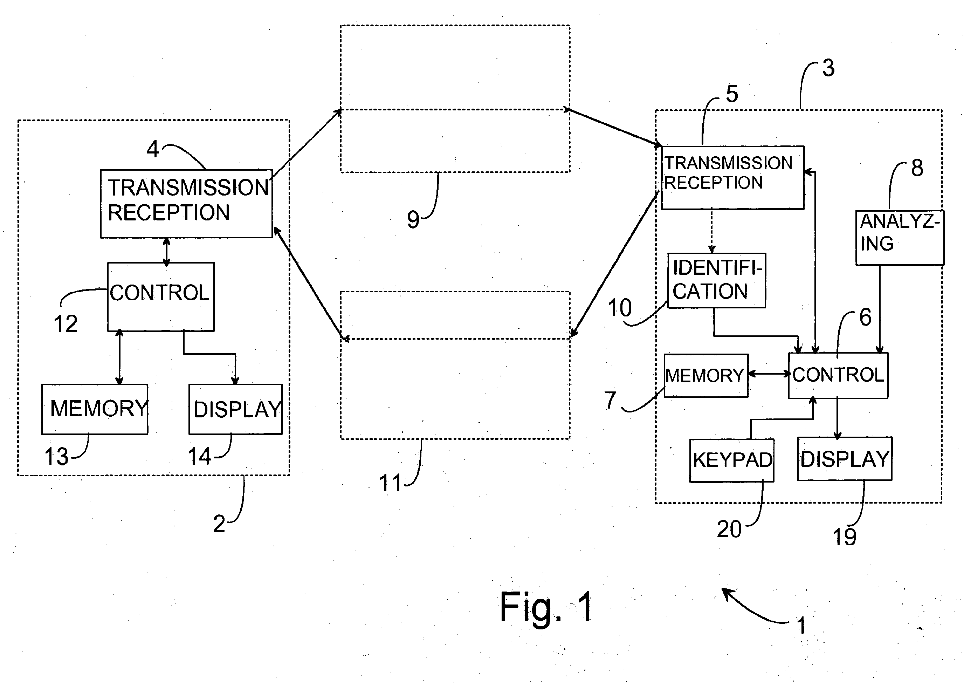

In the following, the operation of the method according to the first advantageous embodiment of the invention will be described by using, as an example, a system 1 complying with the advantageous embodiment of the invention, as shown in Fig. 1. The system 1 comprises one or more control rooms 2 or the like, in which devices 3 can be monitored. The devices 3 are, for example, automatic vending machines for piece goods, such as drink vending machines, newspaper vending machines, ticket vending machines, stamp vending machines, slot machines, etc. However, it will be obvious that also other devices 3 can be used in connection with the system 1, including, for example, traffic light devices, security devices, alarm devices, locking devices, etc. The control room 2 and each device 3 are provided with first communication means 4 and second communication means 5, respectively. In addition, at least a first and a second connection form are available in the system 1. The first connection and the second connection are used for calling a device 3 to be monitored from the control room 2, and for data transmission from the device 3 to the control room 2, respectively. The device 3 comprises a control block 6 which preferably comprises a processor (MCU) or the like for controlling the functions of the device 3. Furthermore, the device 3 has a memory 7 and analyzing means 8. The analyzing means 8 comprise the necessary means (not shown) for examining the status of the device, for example means for finding out the numbers of different items in the device. It will be obvious that the devices 3 may also comprise other means and that the details of the devices 3 may differ from each other even to a significant extent, but these are not relevant in view of applying the invention.

For each device 3, at least one telephone number or corresponding identification is allocated, to be used when calling the device 3. Correspondingly, at least one telephone number or other identification is reserved for use by the control room 2, to be used when calling the device 3.

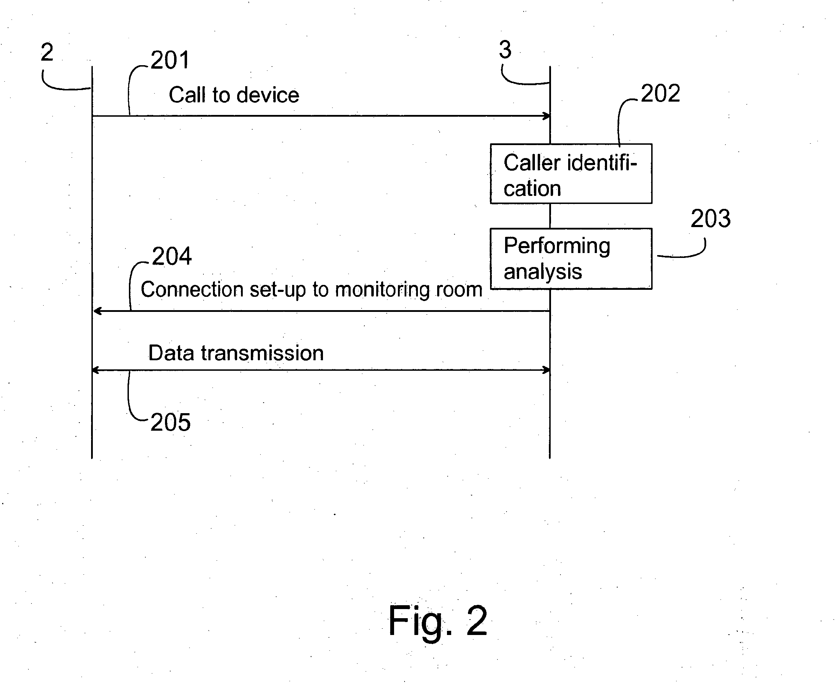

At the stage when the control room 2 wants to find out information about a device 3, for example the operating status of the device 3, the number of a given item left, the numbers of all items left, the status of the locking, or the like, preferably the following steps are taken in the method according to the first advantageous embodiment of the invention. The signalling to be carried out in these steps is shown in a reduced manner in Fig. 2. In the first connection set-up step, a call is made from the control room 2 to the desired device (arrow 201 in Fig. 2). Thus, information, preferably the telephone number, of the device 3 to be called is transmitted to the first communication means 4. After this, the first communication means 4 start to set up a call, for example, by sending a call signal to a first communication network 9, such as a circuit-switched telecommunications network. The signalling relating to the call in the first communication network includes information about the caller, preferably the number of the subscriber A, as well as about the device 3, preferably the subscriber B. According to the transmission protocols of the first communication network 9, the call is transmitted to the desired device 3. In the device 3, an identification step is taken to identify the caller. The second communication means of the device 3 comprise means 10 for identifying an incoming call, to detect the incoming call. At this stage, the calling number is determined on the basis of the signalling data of the incoming call (block 202). The means 10 for identifying an incoming call transmit information about the caller to the control block 6, in which the identification data of the caller, preferably stored in the memory 7 of the device 3; are examined and compared with the identification data transmitted in connection with the incoming call. If an identification corresponding to the identification data transmitted in connection with the incoming call is found in the memory, it is then determined which measures should be taken in the device 3. It should be noted that the device 3 does not answer the incoming call, wherein no call costs are incurred for the caller or for the device 3 receiving the call in normal telecommunication systems.

If necessary, also more than one caller identification number can be stored in the device 3, wherein for each identification number, separate measures can be set to be taken in the device 3 after receiving a call from said number. One identification number can be determined, for example, for an inquiry of the numbers of different items contained in the device 3, a second identification number for an inquiry of the sum of money in the device 3, a third identification number for an inquiry of the internal temperature of the device, etc. In some cases, it will be sufficient to determine one identification number, wherein substantially the same step is always taken in the device 3 when the device 3 receives a call from this number.

After the identification step, the device 3 starts to take the necessary steps (block 203). For example, the control block 6 transfers an inquiry of the number of items to the analyzing means 8. The analyzing means 8 find out the numbers of different items, unless this data is not already known in the analyzing means 8, and transfer the data about the numbers to the control block 6. After this, the control block 6 generates a reply message in which the requested data is included.

At the stage of transmitting the reply message, the data are transmitted to the control room 2. At this stage, the second communication means 5 of the device 3 start to set up a connection to a second communication network 11 (arrow 204). This second communication network 11 is, for example, a packet-switched communication network 11. After the connection has been set up, the reply message is transmitted according to the transmission protocols of this second communication network 11 to the control room 2 (block 205), in which the first communication means 4 receive the message and transmit the data to the control block 12 of the control room where the data of the message is stored in a memory 13, if necessary. In the control room 2, the received data can be, for example, displayed on a display 14, wherein the control room personnel can use this data to determine which measures should be possibly taken. In this system according to the invention, communication costs are primarily incurred only when data is transmitted from the device 3 to the control room 2. Preferably, the communication costs are substantially determined on the basis of the data to be transmitted but not the connection time.

It should be mentioned that at said step of transmitting the reply message, the data transmission does not need to be unidirectional but, if necessary, data can also be transmitted from the control room 2 to the device 3.

In the system 1 described in this specification, a different communication network is set up for each connection of different type; however, it will be obvious that said first 9 and second communication network 12 can, in practice, be in the same communication network.

In case a device 3 wants maintenance or fresh supply, for example a maintenance person will go to the location of the device 3 and take the necessary measures. When supplying items for sale, the maintenance person sets information in the device, preferably in the memory 7, about the numbers of different items included in the device 3. When an item is sold from the device 3, the number corresponding to this item can be reduced by the number of items sold, wherein the numbers are always up-to-date in the memory 7 and no separate analyzing means 8 will thus be needed to determine this data.

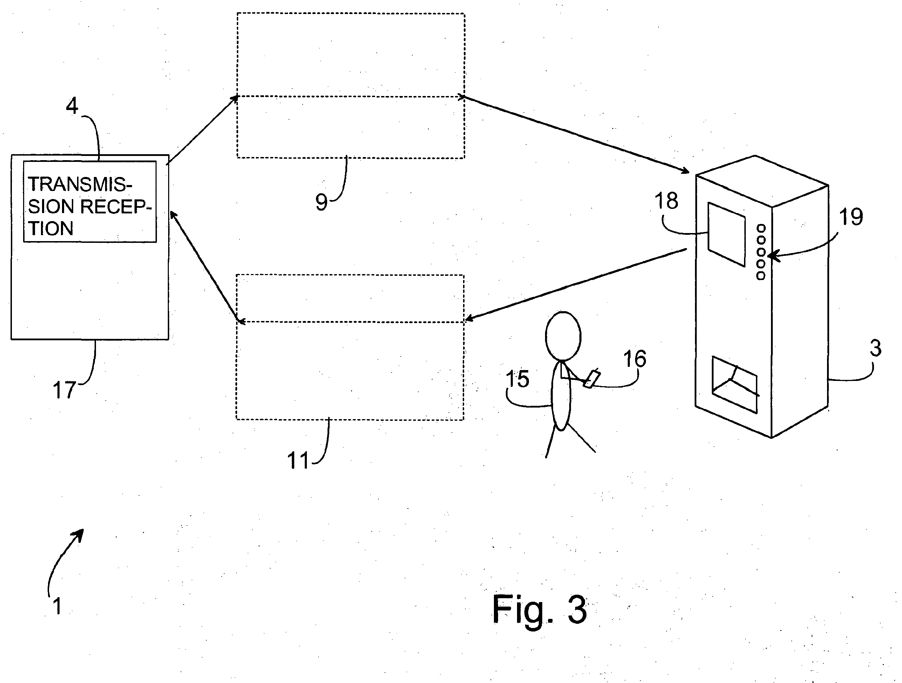

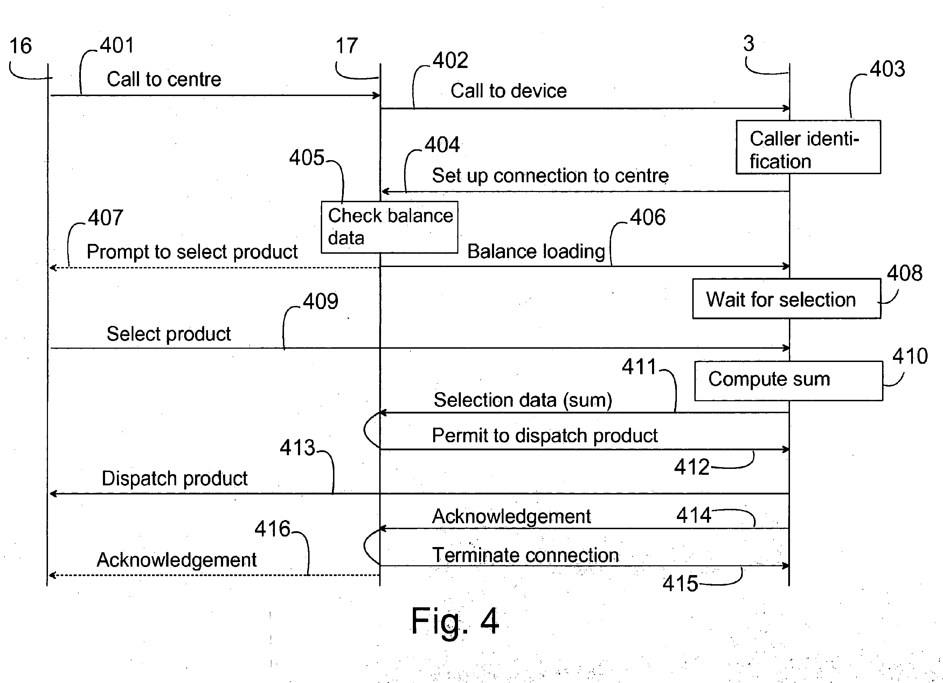

We shall still describe the operation of the method according to a second advantageous embodiment of the invention, applied in a purchase event, with reference to the system of Fig. 3 and the signalling chart of Fig. 4. A person 15 wants to buy an item for sale in the device 3 by using his/her personal telecommunication terminal 16, preferably mobile phone, for the payment transaction. Thus, the person calls a given telephone number or sends a text message or the like to a given text message centre or the like (arrow 401 in Fig. 4). The number to which the connection is to be made is preferably indicated in connection with the device 3, and this number relates to the debiting and control centre 17 of the system. This debiting and control centre 17 may be the same as the control room 2 presented above in the system according to the first advantageous embodiment of the invention, or it may be a unit separate from that.

The call or text message is received in the first communication means 4 of the debiting and control centre 17, where also the identification data of the caller are preferably determined on the basis of the number of the subscriber A. Next, the third communication means 4 call the device 3 by using the first communication network 9 (arrow 402), wherein the incoming call is detected in the device 3, as presented above in connection with the description of the first embodiment of the invention. Also in this second advantageous embodiment, the device 3 does not answer the incoming call but will start to take certain measures, such as to find out the identification data of the caller (block 403). After this, the device 3 sets up a connection to the debiting and control centre 17 by using the second communication network 11 (arrow 404). In the debiting and control centre 17, the balance or debiting data of the account of said person are also checked, if purchasing based on debiting is allowed for said user and/or product to be selected (block 405). If necessary, the balance data can be transmitted to the device 3 (arrow 406). If necessary, the debiting and control centre 17 sends the person a prompt to select an item and possibly also the number of items (arrow 407), or the selection prompt is displayed on the display 18 of the device 3. The device 3 will remain waiting for the selection of the item by the person (block 408). The person selects the product, for example, by selection means 19, or the like, in the device 3 (arrow 409). The device 3 contains stored information about the price of each item for sale, wherein after the selection, the device 3 may determine the price of the purchase made by the person (block 410). The information about the price is transmitted via the connection formed on the second communication network to the debiting and control centre 17 (arrow 411), in which it is compared with the user's balance data (unless debiting is used), and if the balance is at least as high as the price of the purchase, the device 3 can be informed about the acceptance of the purchase transaction (arrow 412). After this, the device 3 dispenses the purchased product to the person (arrow 413). Information about the successful purchase transaction is transmitted to the debiting and control centre 17 (arrow 414), and the connection is terminated (arrow 415). The person's balance data is reduced by a sum corresponding to the purchase, and the changed balance data is updated in the person's data at the debiting and control centre 17. If debiting is used to charge for the purchase transaction, debiting data is generated, wherein the person's purchases are charged, for example, in connection with a telephone bill. Furthermore, the charging for the purchase transaction can be made, for example, directly from the person's bank account, wherein the balance data are found out from the person's bank and the changed data are updated in the bank by using a suitable electronic data transmission method. If necessary, an acknowledgement of the successful purchase transaction can be transmitted, for example, as a text message to the person's telecommunication terminal (arrow 416).

If, for any reason, the device 3 cannot dispense the selected item or the selected quantity of the selected item, information of this is transmitted to the debiting and control centre 17. Thus, the person's balance data are changed according to the purchase sum corresponding to the real number of items dispensed.

Also in this second advantageous embodiment of the invention, there will be no connection costs at the stage when information about the initiation of the payment transaction is transmitted from the debiting and control centre 17 to the device 3, but first at the stage when information is transmitted between the device 3 and the debiting and control centre 17 in the second communication network 11.

It should also be mentioned that the invention is not limited to applications in which the device 3 transmits a reply message to the same control room from which a call was made to the device 3, but the reply message can also be transmitted to another location, wherein information about this location is preferably stored in the device 3. In this alternative, the calling control room thus primarily initiates the desired measures to be taken. Such an arrangement may be necessary, for example, in a situation in which there are several local storages, servicing companies, etc. within a given area, for example in a state, but the control of the devices 3 is arranged in one control room. The control room may thus be used to control how often data is requested, but the replies are directed to the respective servicing company maintaining each device.

The first 9 and second 11 communication networks applied in connection with the invention may be very different communication networks. The communication networks 9, 11 may each be public switched communication networks, wireless communication networks, or one of said communication networks 9, 11 may be a public switched communication network and another of said communication networks may be a wireless communication network. Non-restricting examples of public switched communication networks to be mentioned include the public switch telecommunication network, the ISDN telephone network and the ADSL telephone network. Non-restricting examples of wireless communication networks to be mentioned in this context include landline mobile communication networks, such as the GSM mobile communication network and the UMTS mobile communication network, as well as satellite telephone networks, such as Globalstar. A circuit-switched connection, which in the system according to the invention is preferably used as the first connection type (the first communication network), and a packet-switched connection (e.g. GPRS), which is preferably used as the second connection type (second communication network) in the system according to the invention, are typically available in mobile communication networks. The Internet data network can also be utilized in the packet-format connection.

It is obvious that the present invention is not limited solely to the above-presented embodiments but it can be modified within the scope of the appended claims.

## Claims

1. A method for collecting data from at least one device (3) to a control room (2), in which method a data transfer request is transmitted to the device (3), and the requested data are determined in the device (3) receiving the data transfer request, the device (3) is called by using a first connection, wherein the caller is identified in the device (3) without answering the call, and that a connection is set up from the device (3) to the control room (2) by using a second connection, **characterized in that** the device (3) is an automatic vending machine for piece goods, that said first connection is used to inform the device (3) of starting a sales transaction, and that information about the final result of the purchase transaction is transmitted from the device (3) by using said second connection.

2. The method according to claim 1, **characterized in that** a circuit-switched connection is used as said first connection and a packet-switched connection is used as said second connection.

3. The method according to claim 1 or 2, **characterized in that** data about the telephone number of the caller is transmitted in said first connection, wherein said telephone number of the caller is used in said identification of the caller.

4. The method according to claim 3, **characterized in that** at least two different sets of data are determined, one telephone number is set for each set of data, wherein the device is called by using the telephone number corresponding to the set of data to be transmitted from the device (3).

5. A device (3) for a system equipped with means (2, 11) for collecting data from the device, and means (4) for sending a data transfer request to the device (3), and which device (3) comprises means (6, 7, 8) for finding out the requested data, means (5, 9) for receiving an incoming call via the first connection, means (10) for identifying the calling number of the incoming call via the first connection without answering the call, and means (5, 11) for setting up a connection from the device (3) to the control room (2) by using a second connection, **characterized in that** said device (3) is an automatic vending machine for piece goods, that said first connection is arranged to be used to inform the device (3) of starting a sales transaction, and that information about the final result of the purchase transaction is arranged to be transmitted from the device (3) by using said second connection.

6. A system comprising the device of claim 5.

7. The system according to claim 6, **characterized in that** said means (4, 9) for calling the device (3) comprise means (9) for setting up a circuit-switched connection, and said means (5, 11) for setting up a connection from the device (3) to the control room (2) comprise means (11) for setting up a packet-switched connection.

8. The system according to claim 6 or 7, **characterized in that** said means (4, 9) for calling the device (3) comprise means (9) for transmitting information about the telephone number of the caller, the means (10) for identifying the calling number in the device (3) comprise means (7, 10) for using said telephone number of the caller for identifying the caller.

9. The system according to claim 8, **characterized in that** at least two different sets of data are determined, one telephone number is set for each set of data, wherein the device is arranged to be called by using the telephone number corresponding to the set of data to be transmitted from the device (3).

## Patentansprüche

1. Verfahren zur Sammlung von Daten von wenigstens einer Vorrichtung (3) an einen Steuerstand (2), in welchem Verfahren eine Datentransferanfrage an die Vorrichtung (3) übermittelt wird und die angefragten Daten in der Vorrichtung (3), die die Datentransferanfrage empfängt, bestimmt werden, die Vorrichtung (3) unter Verwendung einer ersten Verbindung angerufen wird, wobei der Anrufer in der Vorrichtung (3) ohne Beantwortung des Anrufs identifiziert wird, und dass eine Verbindung von der Vorrichtung (3) zum Steuerstand (2) unter Verwendung einer zweiten Verbindung hergestellt wird, **dadurch gekennzeichnet, dass** die Vorrichtung (3) ein Verkaufsautomat für Stückwaren ist, dass die erste Verbindung verwendet wird, um die Vorrichtung (3) über den Beginn einer Verkaufstransaktion zu informieren, und dass Informationen über das endgültige Ergebnis der Verkaufstransaktion unter Verwendung der zweiten Verbindung von der Vorrichtung (3) übermittelt werden.

2. Verfahren nach Anspruch 1, **dadurch gekennzeichnet, dass** eine leitungsvermittelte Verbindung als die erste Verbindung und eine Datenpaketverbindung als die zweite Verbindung verwendet werden.

3. Verfahren nach Anspruch 1 oder 2, **dadurch gekennzeichnet, dass** Daten über die Telefonnummer des Anrufers in der ersten Verbindung übermittelt werden, wobei die Telefonnummer des Anrufers bei der Identifizierung des Anrufers verwendet wird.

4. Verfahren nach Anspruch 3, **dadurch gekennzeichnet, dass** wenigstens zwei verschiedene Datensätze bestimmt werden und eine Telefonnummer für jeden Datensatz eingestellt ist, wobei die Vorrichtung unter Verwendung der Telefonnummer entsprechend dem von der Vorrichtung (3) zu übertragenden Datensatz angerufen wird.

5. Vorrichtung (3) für ein System, das mit einer Einrichtung (2, 11) zur Sammlung von Daten von der Vorrichtung und einer Einrichtung (4) zum Senden einer Datentransferanfrage an die Vorrichtung (3) ausgerüstet ist, und wobei die Vorrichtung (3) eine Einrichtung (6, 7, 8) zum Ermitteln der angefragten Daten, eine Einrichtung (5, 9) zum Empfangen eines eingehenden Anrufs über die erste Verbindung, eine Einrichtung (10) zum Identifizieren der anrufenden Nummer des eingehenden Anrufs über die erste Verbindung ohne Beantworten des Anrufs und eine Einrichtung (5, 11) zum Einrichten einer Verbindung von der Vorrichtung (3) zum Steuerstand (2) unter Verwendung einer zweiten Verbindung umfasst, **dadurch gekennzeichnet, dass** die Vorrichtung (3) ein Verkaufsautomat für Stückwaren ist, dass die erste Verbindung so eingerichtet ist, dass sie verwendet wird, um die Vorrichtung (3) über den Beginn einer Verkaufstransaktion zu informieren, und dass Informationen über das endgültige Ergebnis der Verkaufstransaktion so eingerichtet sind, dass sie unter Verwendung der zweiten Verbindung von der Vorrichtung (3) übertragen werden.

6. System, aufweisend die Vorrichtung nach Anspruch 5.

7. System nach Anspruch 6, **dadurch gekennzeichnet, dass** die Einrichtung (4, 9) zum Anrufen der Vorrichtung (3) eine Einrichtung (9) zum Herstellen einer leitungsvermittelten Verbindung aufweist und dass die Einrichtung (5, 11) zum Herstellen einer Verbindung von der Vorrichtung (3) zum Steuerstand (2) eine Einrichtung (11) zum Erstellen einer Datenpaketvermittlung aufweist.

8. System nach Anspruch 6 oder 7, **dadurch gekennzeichnet, dass** die Einrichtung (4, 9) zum Anrufen der Vorrichtung (3) eine Einrichtung (9) zum Übertragen von Informationen über die Telefonnummer des Anrufers aufweist, wobei die Einrichtung (10) zum Identifizieren der anrufenden Nummer in der Vorrichtung (3) eine Einrichtung (7, 10) zur Verwendung der Telefonnummer des Anrufers zum Identifizieren des Anrufers aufweist.

9. Verfahren nach Anspruch 8, **dadurch gekennzeichnet, dass** wenigstens zwei verschiedene Datensätze bestimmt werden und eine Telefonnummer für jeden Datensatz eingestellt ist, wobei die Vorrichtung so eingerichtet ist, dass sie unter Verwendung der Telefonnummer entsprechend dem von der Vorrichtung (3) zu übertragenden Datensatz angerufen wird.

## Revendications

1. Un procédé de recueil de données à partir d'au moins un dispositif (3) vers une salle de commande (2), dans lequel, dans ledit procédé, une demande de transfert de données est transmise au dispositif (3) et les données demandées sont déterminées dans le dispositif (3) recevant la demande de transfert de données, le dispositif (3) est appelé au moyen d'une première connexion, l'appelant étant identifié dans le dispositif (3) sans répondre à l'appel, et dans lequel une connexion est établie du dispositif (3) à la salle de commande (2) au moyen d'une deuxième connexion, **caractérisé en ce que** le dispositif (3) est un distributeur automatique de marchandises à la pièce, que ladite première connexion est utilisée de façon à informer le dispositif (3) du début d'une transaction de vente, et que des informations relatives au résultat final de la transaction d'achat sont transmises à partir du dispositif (3) au moyen de ladite deuxième connexion.

2. Le procédé selon la revendication 1, **caractérisé en ce qu'**une connexion à commutation de circuits est utilisée en tant que ladite première connexion et une connexion à commutation de paquets est utilisée en tant que ladite deuxième connexion.

3. Le procédé selon la revendication 1 ou 2, **caractérisé en ce que** des données relatives au numéro de téléphone de l'appelant sont transmises dans ladite première connexion, ledit numéro de téléphone de l'appelant étant utilisé dans ladite identification de l'appelant.

4. Le procédé selon la revendication 3, **caractérisé en ce qu'**au moins deux ensembles de données différents sont déterminés, un numéro de téléphone est défini pour chaque ensemble de données, le dispositif étant appelé au moyen du numéro de téléphone correspondant à l'ensemble de données à transmettre à partir du dispositif (3).

5. Un dispositif (3) pour un système équipé avec un moyen (2, 11) de recueil de données provenant du dispositif et un moyen (4) d'envoi d'une demande de transfert de données au dispositif (3), et ledit dispositif (3) comprenant un moyen (6, 7, 8) de trouver les données demandées, un moyen (5, 9) de réception d'un appel entrant par l'intermédiaire de la première connexion, un moyen (10) d'identification du numéro appelant de l'appel entrant par l'intermédiaire de la première connexion sans répondre à l'appel et un moyen (5, 11) d'établissement d'une connexion du dispositif (3) à la salle de commande (2) au moyen d'une deuxième connexion, **caractérisé en ce que** ledit dispositif (3) est un distributeur automatique de marchandises à la pièce, que ladite première connexion est agencée de façon à être utilisée de façon à informer le dispositif (3) du début d'une transaction de vente, et que des informations relatives au résultat final de la transaction d'achat sont agencées de façon à être transmises du dispositif (3) au moyen de ladite deuxième connexion.

6. Un système comprenant le dispositif selon la revendication 5.

7. Le système selon la revendication 6, **caractérisé en ce que** ledit moyen (4, 9) d'appel du dispositif (3) comprend un moyen (9) d'établissement d'une connexion à commutation de circuits, et ledit moyen (5, 11) d'établissement d'une connexion du dispositif (3) à la salle de commande (2) comprenant un moyen (11) d'établissement d'une connexion à commutation de paquets.

8. Le système selon la revendication 6 ou 7, **caractérisé en ce que** ledit moyen (4, 9) d'appel du dispositif (3) comprend un moyen (9) de transmission d'informations relatives au numéro de téléphone de l'appelant, le moyen (10) d'identification du numéro appelant dans le dispositif (3) comprenant un moyen (7, 10) d'utilisation dudit numéro de téléphone de l'appelant pour identifier l'appelant.

9. Le système selon la revendication 8, **caractérisé en ce qu'**au moins deux ensembles de données différents sont déterminés, un numéro de téléphone est défini pour chaque ensemble de données, le dispositif étant agencé de façon à être appelé au moyen du numéro de téléphone correspondant à l'ensemble de données à transmettre à partir du dispositif (3).
